# EUROPÄISCHE PATENTSCHRIFT

(11) **EP 1 088 858 B1**
(45) Veröffentlichungstag und Bekanntmachung des Hinweises auf die Patenterteilung: **09.07.2003**
(21) Anmeldenummer: 00810862.3
(22) Anmeldetag: 21.09.2000
(51) Int. Cl.: C09B 62/08, C09B 62/04

(54) **Reaktivfarbstoffe, enthaltend einen Formazan- und einen Monoazofarbstoffrest, Verfahren zu deren Herstellung und deren Verwendung**
Reactive dyes containing a formazan dye moiety and a monoazo dye moiety, process for their preparation and the use thereof
Colorants réactifs contenant un groupe chromophore de type formazane et un groupe chromophore de type monoazoique, procédé pour leur préparation et leur utilisation

(30) Priorität: 30.09.1999 CH 179499
(43) Veröffentlichungstag der Anmeldung: 04.04.2001
(73) Patentinhaber: Ciba Specialty Chemicals Holding Inc., 4057 Basel (CH)
(72) Erfinder: Reichert, Hans, 79618 Rheinfelden (DE)

(56) Entgegenhaltungen:
- EP-A- 0 478 503
- GB-A- 2 085 908

## Beschreibung

Die vorliegende Erfindung betrifft neue olivegrünfärbende Reaktivfarbstoffe, enthaltend einen Formazan- und einen Monoazofarbstoffrest, Verfahren zu ihrer Herstellung und ihre Verwendung zum Färben oder Bedrucken von textilen Fasermaterialien.

Die EP, A, 0 478 503 offenbart Reaktisfarbstoffe, enthaltend zwei durch ein Brückenglied verbundenen Chromophorreste, worin das Brückenglied aus zwei reaktiven Triazinaminoresten und einem aliphatischen Rest besteht.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, beispielsweise in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe, für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen olivegrünfärbenden Reaktivfarbstoffen die gestellte Aufgabe weitgehend gelöst wird.

Gegenstand der vorliegenden Erfindung sind somit Reaktivfarbstoffe der Formel (1) 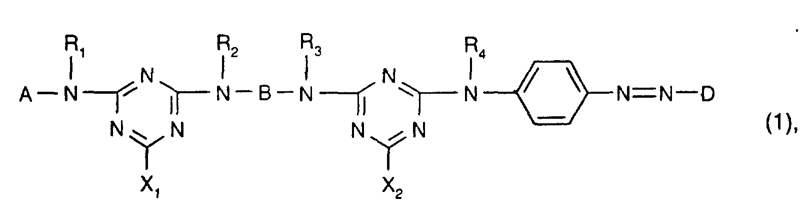 worin
R₁, R₂, R₃ und R₄ unabhängig voneinander Wasserstoff oder gegebenenfalls substituiertes C₁-C₄-Alkyl bedeuten,
X₁ und X₂ Halogen sind,
B ein C₂-C₁₂-Alkylenrest ist, welcher durch 1, 2 oder 3 Glieder -O- unterbrochen sein kann und unsubstituiert oder durch Hydroxy substituiert ist,
A einen Formazanrest der Formel (2) oder (3) 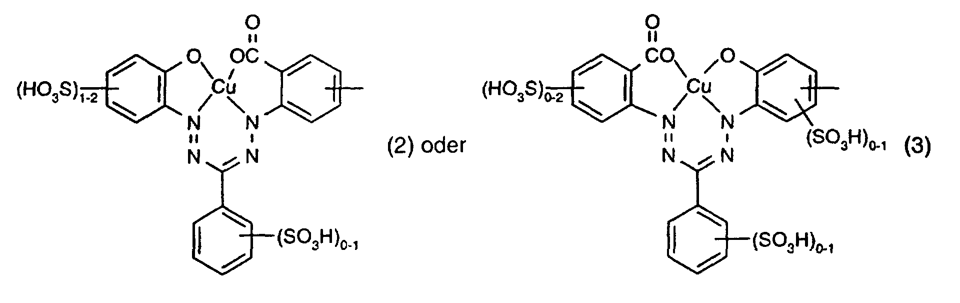 bedeutet,
D für einen Rest der Formel (4) oder (5) 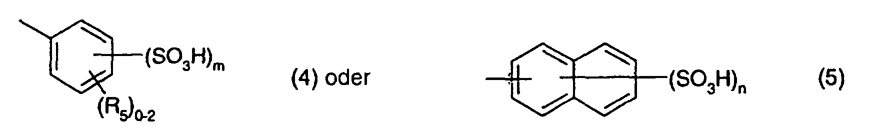 steht, worin
m die Zahl 1 oder 2 ist,
n die Zahl 1, 2 oder 3 bedeutet und
(R₅)₀₋₂ für 0 bis 2 gleiche oder verschiedene Substituenten aus der Gruppe C₁-C₄-Alkyl, C₁-C₄-Alkoxy, C₂-C₄-Alkanoylamino und Halogen steht.

Die Reste R₁, R₂, R₃ und R₄ im Reaktivfarbstoff der Formel (1) sind als Alkylreste geradkettig oder verzweigt. Die Alkylreste können weitersubstituiert sein, z.B. durch Hydroxy, Sulfo, Sulfato, Cyano oder Carboxy. Als Beispiele seien die folgenden Reste genannt: Methyl, Ethyl, Propyl, Isopropyl, Butyl, Isobutyl, sek.-Butyl oder tert.-Butyl, sowie die entsprechenden durch Hydroxy, Sulfo, Sulfato, Cyano oder Carboxy substituierten Reste. Als Substituenten sind Hydroxy, Sulfo oder Sulfato, insbesondere Hydroxy oder Sulfato und vorzugsweise Hydroxy bevorzugt.

Bevorzugt sind R₁ und R₄ Wasserstoff oder C₁-C₄-Alkyl, insbesondere Wasserstoff.

R₂ und R₃ sind bevorzugt unabhängig voneinander Wasserstoff oder unsubstituiertes oder durch Hydroxy, Sulfo, Sulfato, Cyano oder Carboxy substituiertes C₁-C₄-Alkyl. Gemäss einer interessanten Ausführungsform bedeutet hierbei einer der Reste R₂ und R₃durch Hydroxy, Sulfo, Sulfato, Cyano oder Carboxy substituiertes C₁-C₄-Alkyl, und der andere der Reste R₂ und R₃ Wasserstoff oder C₁-C₄-Alkyl, insbesondere Wasserstoff.

Besonders bevorzugt sind R₂ und R₃ unabhängig voneinander Wasserstoff oder C₁-C₄-Alkyl, insbesondere Wasserstoff.

Als C₁-C₄-Alkyl kommen für R₅ unabhängig voneinander z.B. Methyl, Ethyl, Propyl, Isopropyl, Butyl, sek.-Butyl, tert.-Butyl oder Isobutyl, vorzugsweise Methyl oder Ethyl und insbesondere Methyl, in Betracht.

Als C₁-C₄-Alkoxy kommen für R₅ unabhängig voneinander z.B. Methoxy, Ethoxy, Propoxy, Isopropoxy, Butoxy oder Isobutoxy, vorzugsweise Methoxy oder Ethoxy und insbesondere Methoxy, in Betracht.

Als C₂-C₄-Alkanoylamino kommen für R₅ unabhängig voneinander z.B. Acetylamino oder Propionylamino und insbesondere Acetylamino, in Betracht.

Als Halogen kommen für R₅ unabhängig voneinander z.B. Fluor, Chlor oder Brom, vorzugsweise Chlor oder Brom und insbesondere Chlor, in Betracht.

R₅ bedeutet vorzugsweise Wasserstoff oder einen Substituenten aus der Gruppe C₁-C₄-Alkyl, C₁-C₄-Alkoxy und Halogen.

X₁ und X₂ sind vorzugsweise unabhängig voneinander Chlor oder Fluor, insbesondere Fluor.

Bevorzugt ist B ein C₂-C₆-Alkylenrest, welcher durch 1 oder 2 Glieder -O- unterbrochen sein kann und unsubstituiert oder durch Hydroxy substituiert ist.

Von besonderem Interesse als Brückenglieder B sind C₂-C₆-Alkylenreste, insbesondere solche der Formel -CH₂-CH(R₆)- oder -(R₆)CH-CH₂-, worin R₆ C₁-C₄-Alkyl, insbesondere Methyl, bedeutet und ganz besonders 1,2-Propylen.

Ein geeigneter Formazanrest A der Formel (2) ist z.B ein Rest der Formel

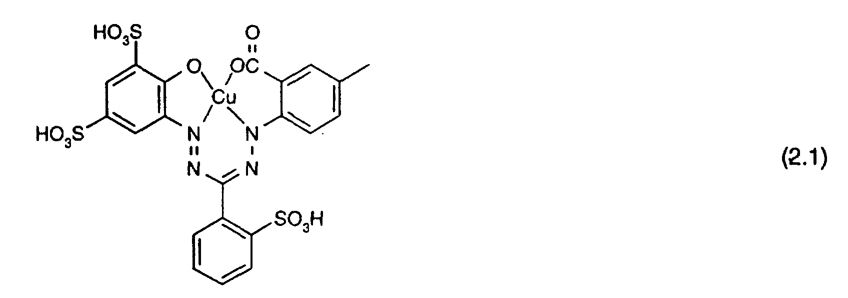

Ein geeigneter Formazanrest A der Formel (3) ist z.B ein Rest der Formel

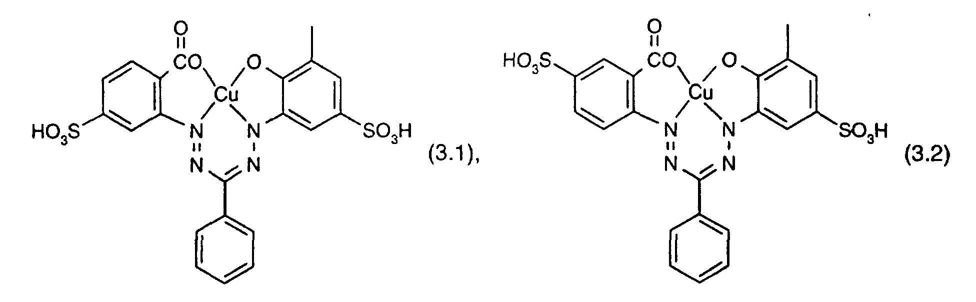

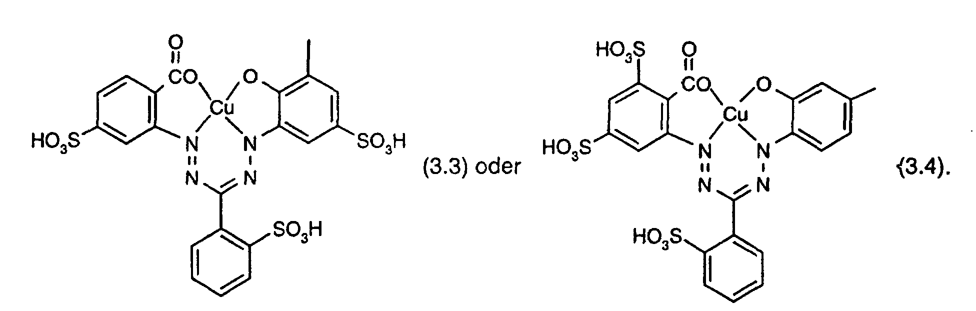

Bevorzugt sind die erfindungsgemässen Reaktivfarbstoffe, worin der Formazanrest A einem Rest der Formel (3.1) entspricht.

In den erfindungsgemässen Reaktivfarbstoffen bedeutet D als Rest der Formel (4) z.B. einen Rest der Formel 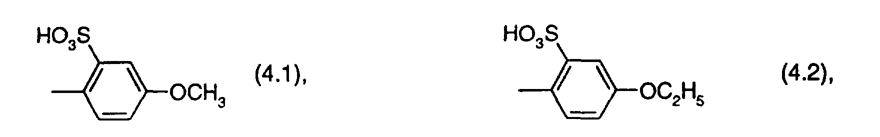 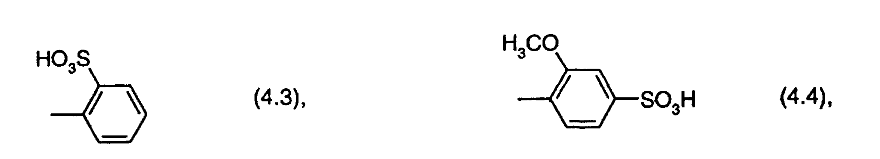 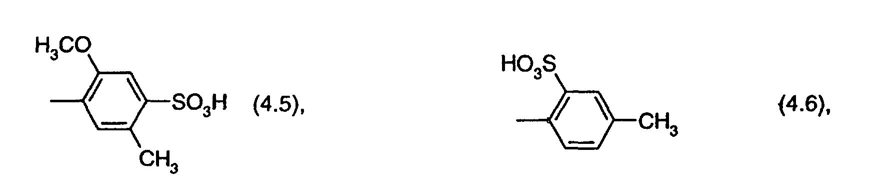 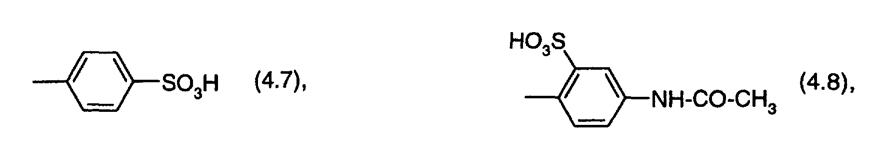 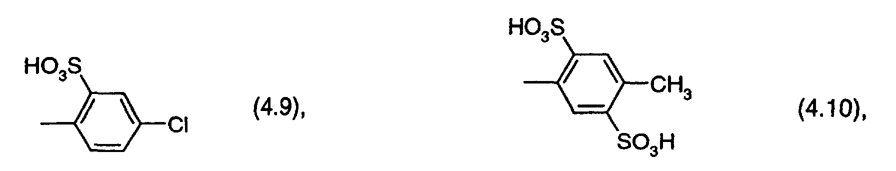 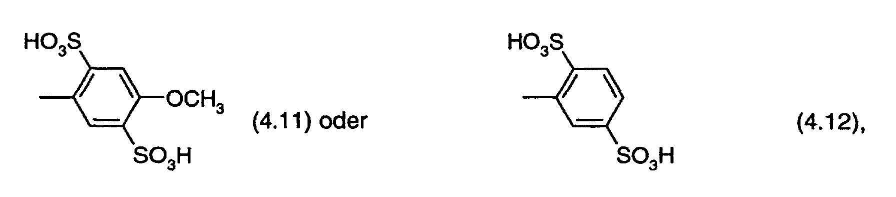 vorzugsweise der Formel (4.1), (4.3), (4.6), (4.10), (4.11) oder (4.12).

In den erfindungsgemässen Reaktivfarbstoffen bedeutet D als Rest der Formel (5) z.B. einen Rest der Formel 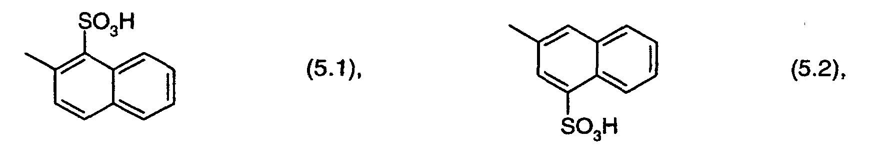 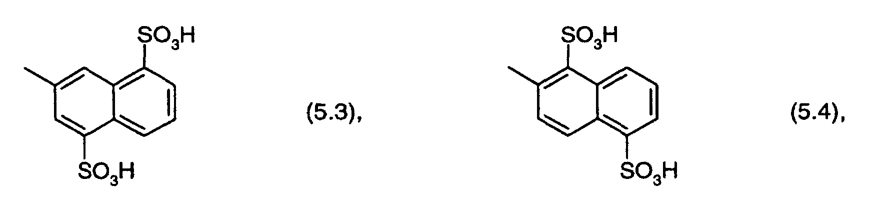 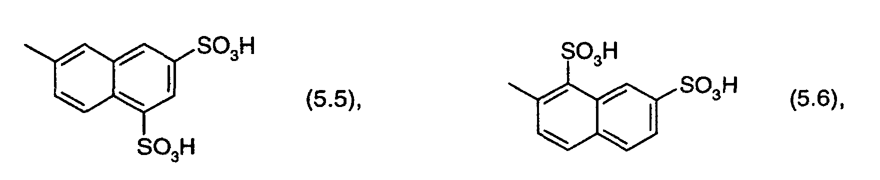 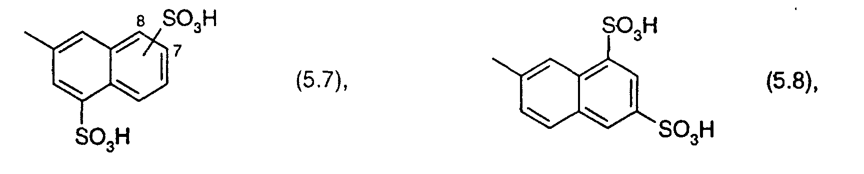 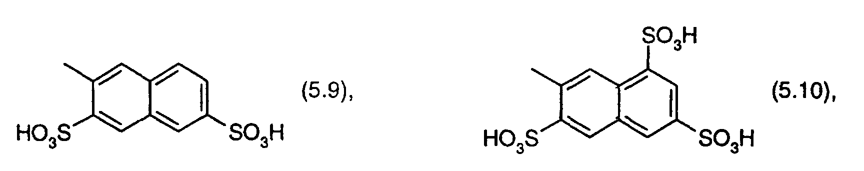 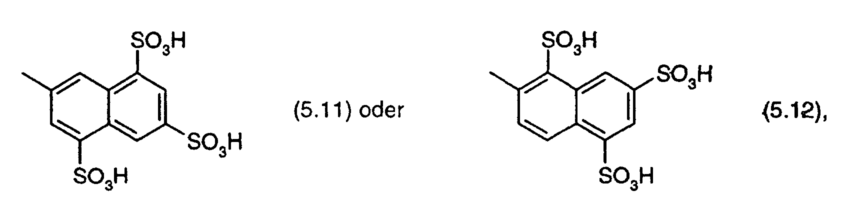 insbesondere der Formel (5.11).

Bevorzugt sind die erfindungsgemässen Reaktivfarbstoffe, worin
D einen Rest der Formel (5a) 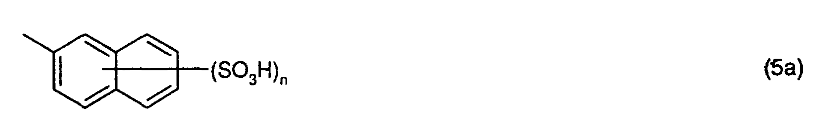 bedeutet, worin
n die Zahl 2 oder 3 ist.

In einer bevorzugten Ausführungsform der erfindungsgemässen Reaktivfarbstoffe der Formel (1) bedeuten
R₁, R₂, R₃ und R₄ Wasserstoff,
X₁ und X₂ Chlor oder Fluor,
B einen Rest der Formel -CH₂-CH(R₆)- oder -(R₆)CH-CH₂-, worin R₆ C₁-C₄-Alkyl, insbesondere Methyl, ist,
A einen Rest der Formel (3.1),
D einen Rest der Formel (5a), worin
n die Zahl 2 oder 3.

In einer besonders bevorzugten Ausführungsform entsprechen die erfindungsgemässen Reaktivfarbstoffe der Formel (1) einem Farbstoff der Formel (1.1)

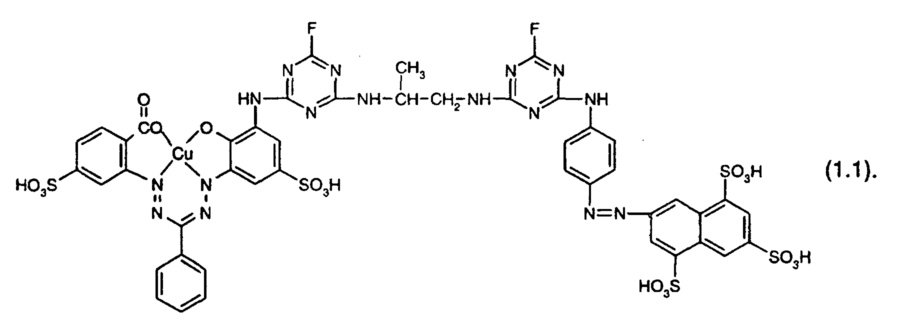

Gegenstand der vorliegenden Erfindung ist ferner ein Verfahren zur Herstellung von Reaktivfarbstoffen der Formel (1), welches dadurch gekennzeichnet ist, dass man eine Verbindung der Formel (6a) 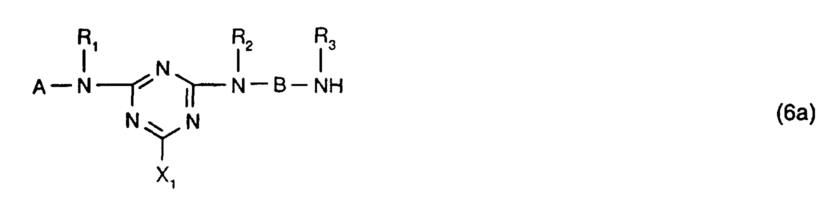 mit einer Verbindung der Formel (7a) 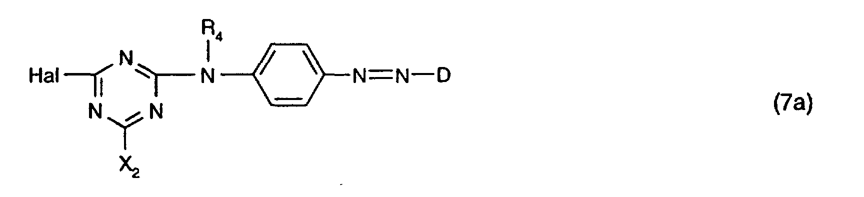 oder eine Verbindung der Formel (6b) 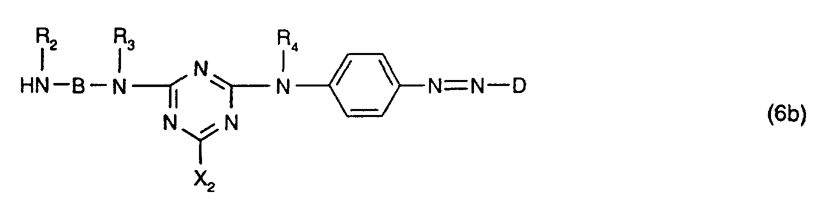 mit einer Verbindung der Formel (7b) 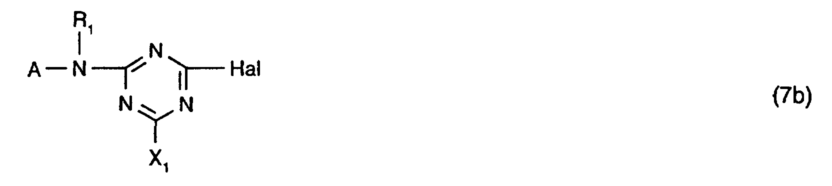 kondensiert, wobei Hal Halogen bedeutet und für A, B, X₁, X₂, R₁, R₂, R₃ und R₄ die oben angegebenen Bedeutungen und Bevorzugungen gelten.

Verbindungen der Formeln (7a) und (7b) können beispielsweise durch Kondensation von Verbindungen der Formel (8a) oder (8b) 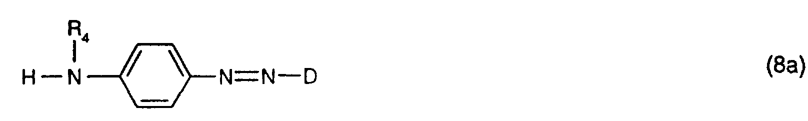 oder

A-NHR₁ (8b)

mit Cyanurchlorid oder Cyanurfluorid erhalten werden. Verbindungen der Formel (6a) und (6b) können erhalten werden, indem eine Verbindung der Formel (7b) oder (7a) mit einem Diamin der Formel R₂-HN-B-NH-R₃ kondensiert wird, wobei gegebenenfalls ein Überschuss des Diamins verwendet wird.

Die Verbindungen der Formeln (8a) und (8b) sind bekannt oder können in Analogie zu bekannten Verbindungen erhalten werden.

Die einzelnen Kondensationsreaktionen können gemäss an sich bekannter Verfahren erfolgen, wie z.B. den in der GB-A-2 085 908 beschriebenen Verfahren. In der Regel erfolgen die Kondensationsreaktionen in wässriger Lösung, bei einer Temperatur von beispielsweise 0 bis 50°C und einem pH-Wert von z.B. 4 bis 9.

Die erfindungsgemässen Reaktivfarbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkalimetall-, Erdalkalimetall- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Reaktivfarbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

a) 48,7 Teile 7-(4-Aminophenylazo)-naphthalin-1,3,5-trisulfonsäure werden in 500 Teile Wasser eingestreut und der pH-Wert mit Hilfe von Natronlauge auf 7 eingestellt. Man kühlt die entstandene Lösung auf 0°C ab und tropft 14 Teile Trifluortriazin zu. Während des Zutropfens wird der pH-Wert der Reaktionsmischung mit Natronlauge bei 7 gehalten. Anschliessend wird zu der Reaktionsmischung eine neutralisierte Lösung von 7,5 Teilen 1,2-Diaminopropan in 100 Teilen Wasser gegeben, der pH-Wert der Reaktionsmischung wird mit Natronlauge bei 6 gehalten, die Temperatur der Reaktionsmischung lässt man auf Raumtemperatur ansteigen. Nach beendeter Reaktion gibt man 200 Teile Natriumchlorid zu, filtriert den entstandenen Niederschlag ab, wäscht mit gesättigter Kochsalzlösung nach und trocknet im Vakuum bei 60°C. Man erhält 50 Teile einer Verbindung, welche in Form der freien Säure der Formel 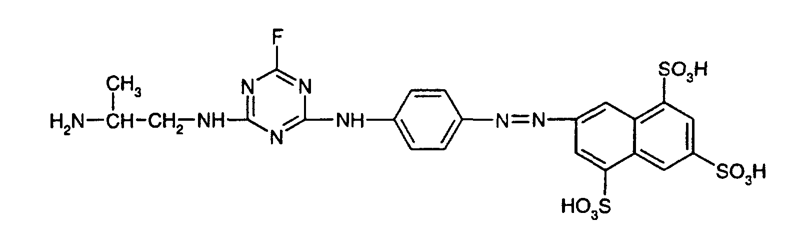 entspricht.
b) Man stellt eine neutrale Lösung von 59,6 Teilen des Kupfer-Komplexes von 5-Amino-3-[3-phenyl-5-(2-carboxy-5-sulfophenyl)-1-formazano]-4-hydroxybenzolsulfonsäure in 600 Teilen Wasser her, kühlt auf 0°C ab, tropft zu dieser Lösung 14 Teile Trifluortriazin und hält den pH-Wert dabei mit Natronlauge bei 5. Nach beendeter Reaktion gibt man 65,7 Teile der gemäss a) hergestellten Verbindung zu, erhöht den pH-Wert der Reaktionsmischung auf 8,5 und die Temperatur auf 20°C. Man rührt unter diesen Bedingungen weiter, bis die Kondensation abgeschlossen ist, versetzt mit 120 Teilen Kochsalz, filtriert den entstandenen Niederschlag ab, wäscht mit gesättigter Kochsalzlösung und trocknet im Vakuum bei 60°C. Man erhält 110 Teile einer Verbindung, welche in Form der freien Säure der Formel (101) 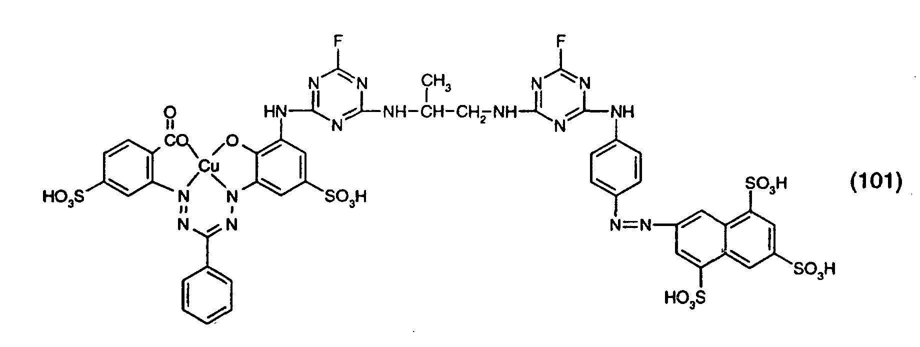 entspricht und Baumwolle in olivegrünem Farbton mit guten Allgemeinechtheiten färbt.

### Beispiele 2 bis 20:

In Analogie zu der in Beispiel 1 beschriebenen Vorgehensweise erhält man aus den Aminoazofarbstoffen der Formel 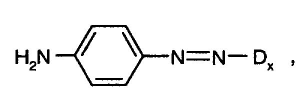 den Diaminen der Formel H₂N-Bₓ-NH₂ und den Kupfer-Formazankomplexen der Formel Aₓ-NH₂ Farbstoffe, die in Form der freien Säure der allgemeinen Formel 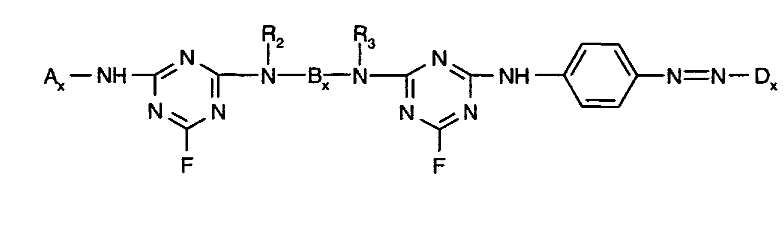 entsprechen, worin Aₓ, 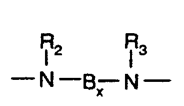 und Dₓ jeweils die in Tabelle 1 angegebenen Reste sind und den in Tabelle 1 angegebenen Resten Aₓ und Dₓ jeweils die oben angegebenen Formeln entsprechen. Die Farbstoffe färben Baumwolle in grünen Farbtönen mit guten Allgemeinechtheiten.

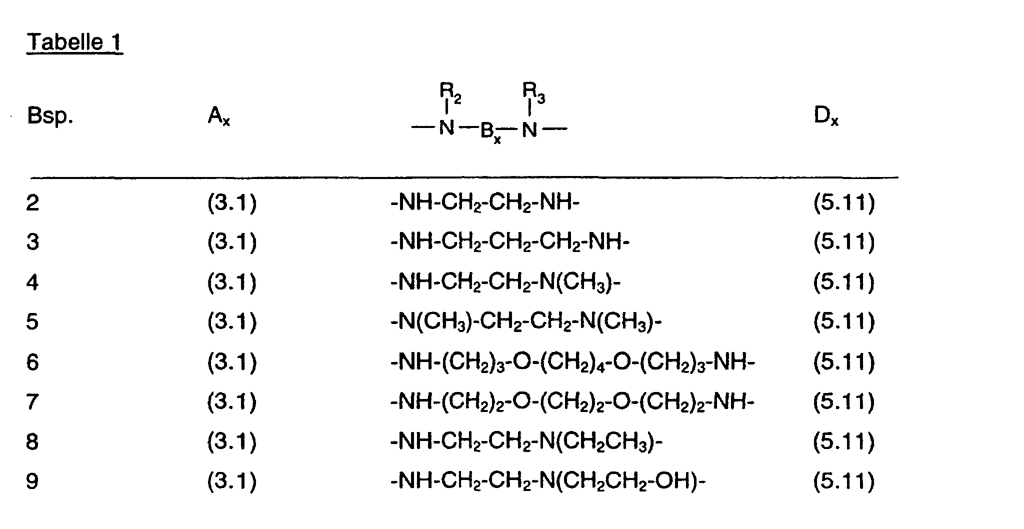

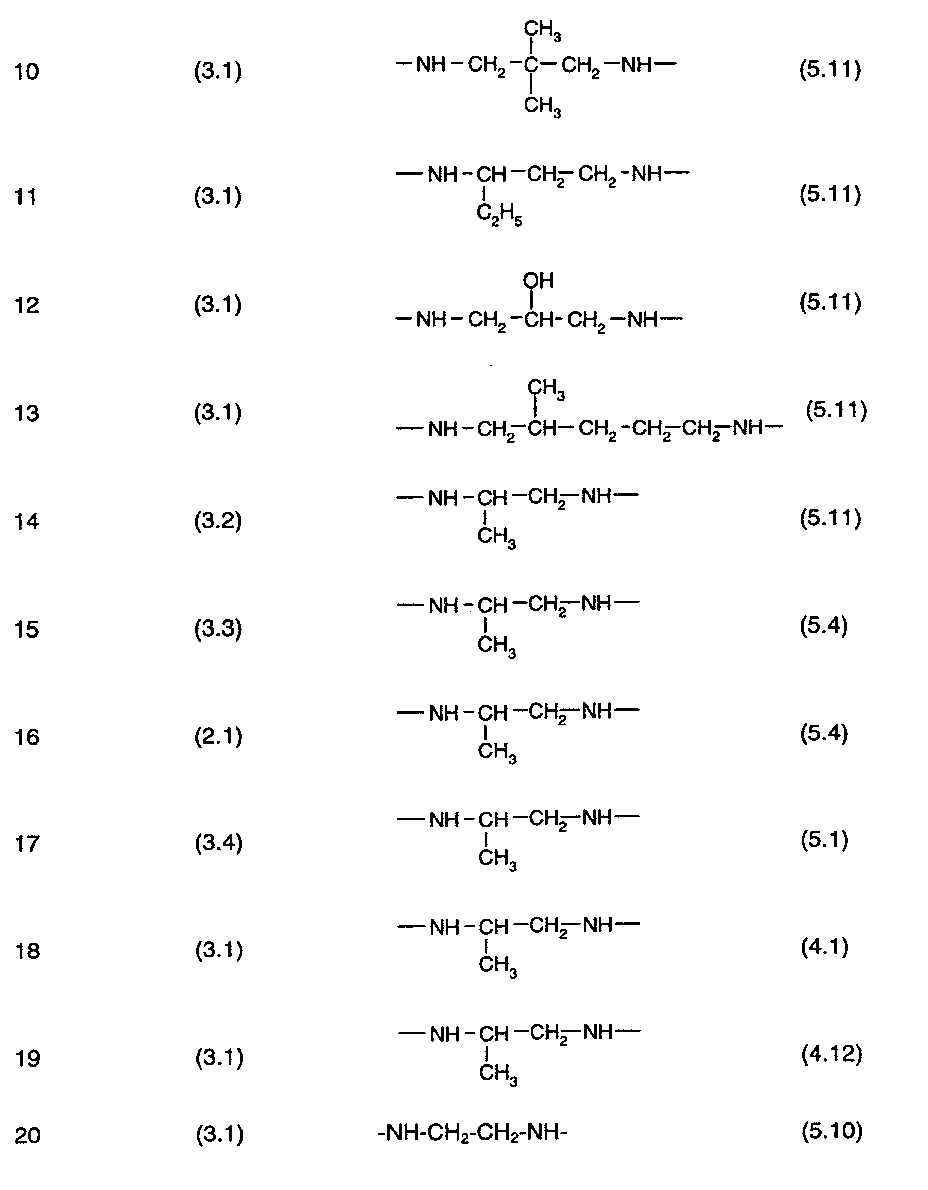

### Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 1 erhaltenen Reaktivfarbstoffes werden unter schnellem Rühren in 100 Teile einer Stammverdickung, enthaltend 50 Teile 5 %-ige Natriumalginat-verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel (1) 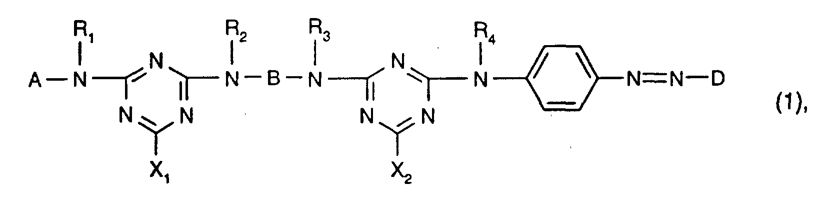 worin
R₁, R₂, R₃ und R₄ unabhängig voneinander Wasserstoff oder gegebenenfalls substituiertes C₁-C₄-Alkyl bedeuten,
X₁ und X₂ Halogen sind,
B ein C₂-C₁₂-Alkylenrest ist, welcher durch 1, 2 oder 3 Glieder -O- unterbrochen sein kann und unsubstituiert oder durch Hydroxy substituiert ist,
A einen Formazanrest der Formel (2) oder (3) 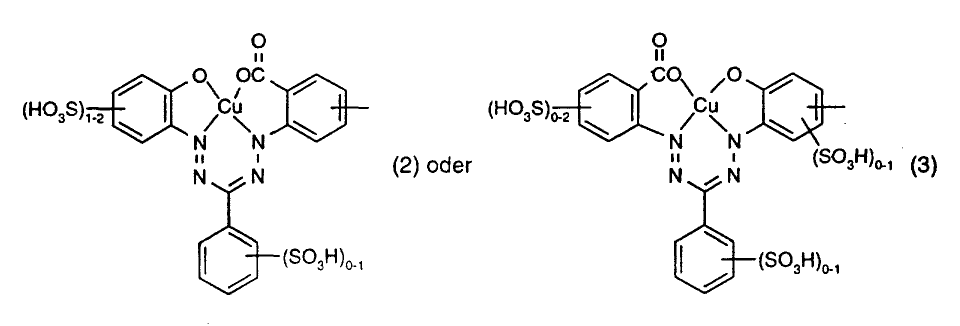 bedeutet,
D für einen Rest der Formel (4) oder (5) 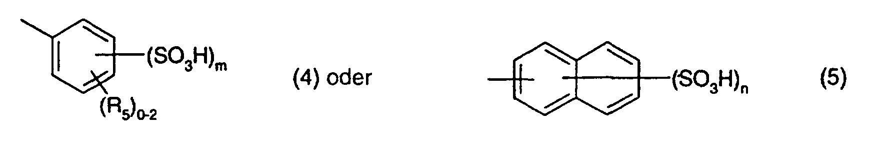 steht, worin
m die Zahl 1 oder 2 ist,
n die Zahl 1, 2 oder 3 bedeutet und
(R₅)₀₋₂ für 0 bis 2 gleiche oder verschiedene Substituenten aus der Gruppe C₁-C₄-Alkyl, C₁-C₄-Alkoxy, C₂-C₄-Alkanoylamino und Halogen steht.

2. Reaktivfarbstoffe gemäss Anspruch 1, **dadurch gekennzeichnet, dass** R₁, R₂, R₃ und R₄ unabhängig voneinander Wasserstoff oder unsubstituiertes oder durch Hydroxy, Sulfo, Sulfato, Cyano oder Carboxy substituiertes C₁-C₄-Alkyl sind.

3. Reaktivfarbstoffe gemäss einem der Ansprüche 1 und 2, **dadurch gekennzeichnet, dass** R₁, R₂, R₃ und R₆ Wasserstoff sind.

4. Reaktivfarbstoffe gemäss einem der Ansprüche 1 bis 3, **dadurch gekennzeichnet, dass** X₁ und X₂ Chlor oder Fluor sind.

5. Reaktivfarbstoffe gemäss einem der Ansprüche 1 bis 4, **dadurch gekennzeichnet, dass** B ein Rest der Formel -CH₂-CH(R₆)- oder -(R₆)CH-CH₂- ist, worin R₆ C₁-C₄-Alkyl, insbesondere Methyl, bedeutet.

6. Reaktivfarbstoffe gemäss einem der Ansprüche 1 bis 5, **dadurch gekennzeichnet, dass** A einen Rest der Formel (3.1) 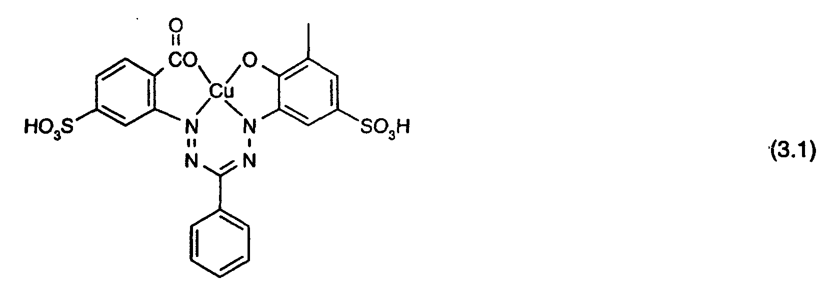 bedeutet.

7. Reaktivfarbstoffe gemäss einem der Ansprüche 1 bis 6, **dadurch gekennzeichnet, dass** D einen Rest der Formel (5a) 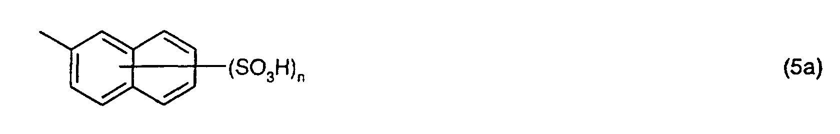 bedeutet, worin
n die Zahl 2 oder 3 ist.

8. Reaktivfarbstoffe gemäss einem der Ansprüche 1 bis 7, **dadurch gekennzeichnet, dass** R₁, R₂, R₃ und R₄ Wasserstoff bedeuten,
X₁ und X₂ Chlor oder Fluor sind,
B ein Rest der Formel -CH₂-CH(R₆)- oder -(R₆)CH-CH₂- ist, worin R₆ C₁-C₄-Alkyl, insbesondere Methyl, bedeutet,
A für einen Rest der Formel (3.1) 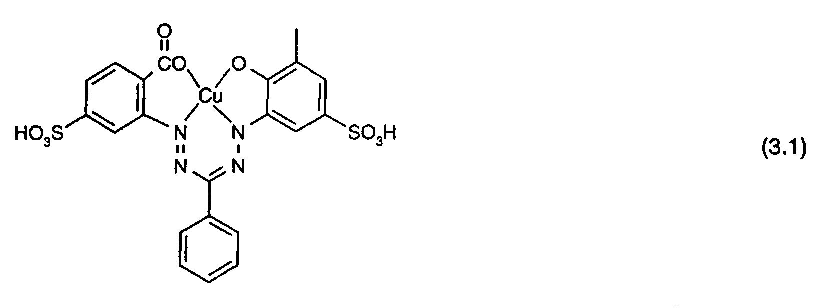 und
D für einen Rest der Formel (5a) 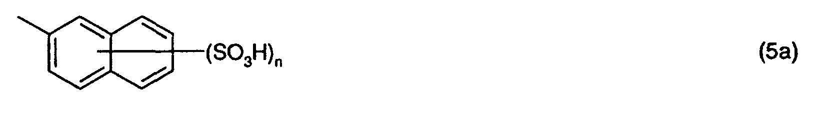 stehen, worin
n die Zahl 2 oder 3 ist.

9. Reaktivfarbstoffe gemäss einem der Ansprüche 1 bis 8, **dadurch gekennzeichnet, dass** der Farbstoff der Formel (1) ein Farbstoff der Formel (1.1) 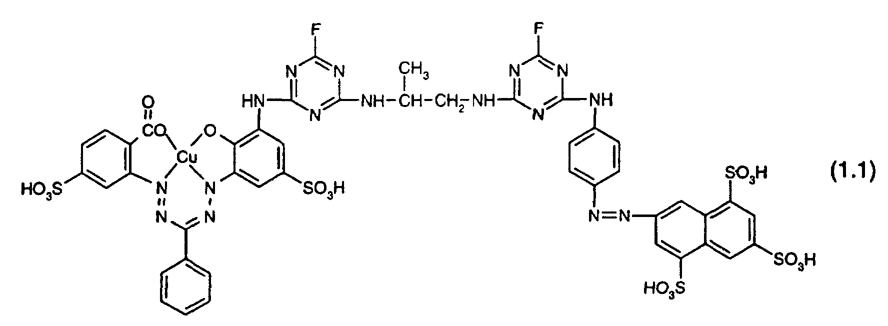 ist.

10. Verfahren zur Herstellung von Reaktivfarbstoffen der Formel (1) gemäss Anspruch 1, **dadurch gekennzeichnet, dass** man
eine Verbindung der Formel (6a) 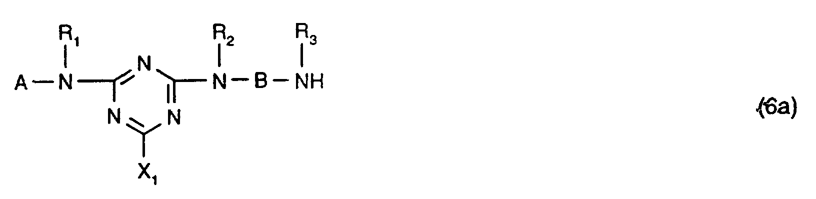 mit einer Verbindung der Formel (7a) 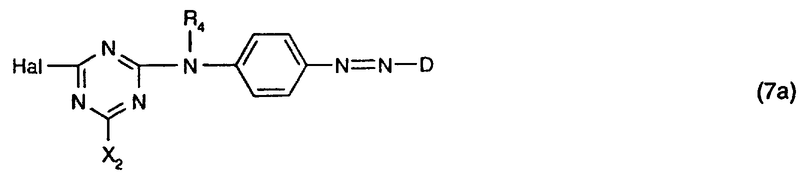 oder eine Verbindung der Formel (6b) 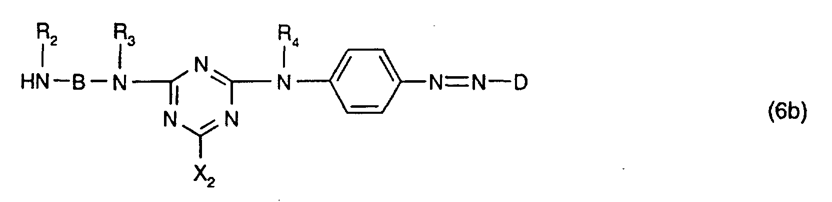 mit einer Verbindung der Formel (7b) 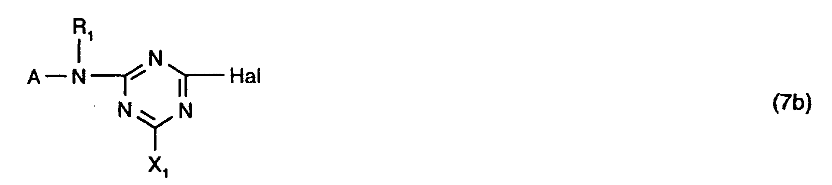 kondensiert, wobei Hal Halogen bedeutet und A, B, X₁, X₂, R₁, R₂, R₃ und R₄ die in Anspruch 1 angegebenen Bedeutungen haben.

11. Verwendung der Reaktivfarbstoffe gemäss einem der Ansprüche 1 bis 9 bzw. der gemäss Anspruch 10 erhaltenen Reaktivfarbstoffe zum Färben oder Bedrucken von hydroxygruppenhaltigen oder stickstoffhaltigen Fassermaterialien.

## Claims

1. A reactive dye of formula (1) 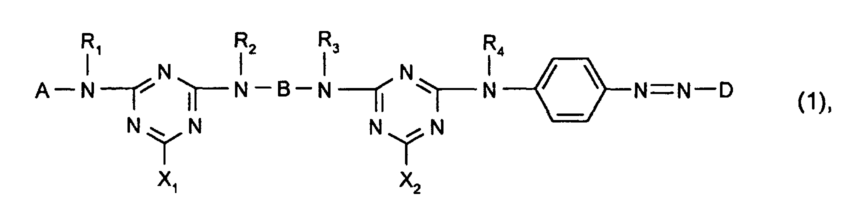 wherein
R₁, R₂, R₃ and R₄ are each independently of the others hydrogen or unsubstituted or substituted C₁-C₄alkyl,
X₁ and X₂ are halogen,
B is a C₂-C₁₂alkylene radical which may be interrupted by 1, 2 or 3 -O- members and is unsubstituted or substituted by hydroxy,
A is a formazan radical of formula (2) or (3) 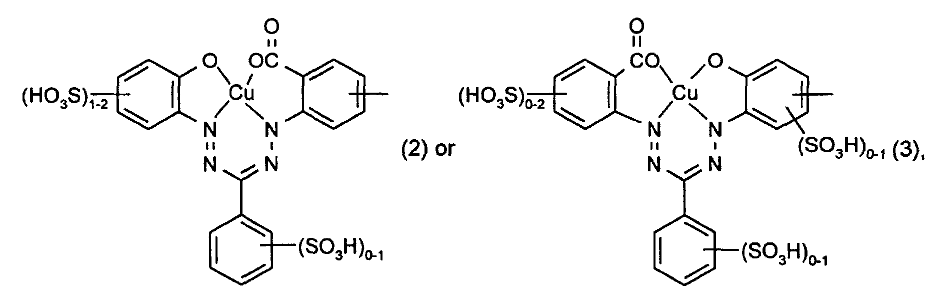
D is a radical of formula (4) or (5) 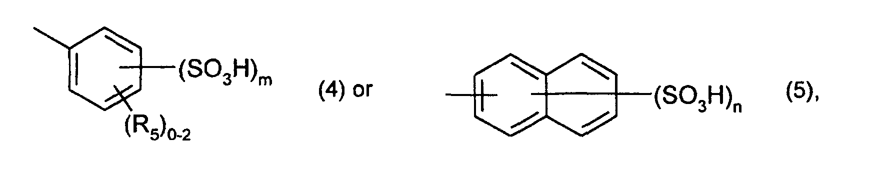 wherein
m is the number 1 or 2,
n is the number 1, 2 or 3 and
(R₅)₀₋₂ denotes from 0 to 2 identical or different substituents from the group C₁-C₄alkyl, C₁-C₄alkoxyl C₂-C₄alkanoylamino and halogen.

2. A reactive dye according to claim 1, wherein
R₁, R₂, R₃ and R₄ are each independently of the others hydrogen or unsubstituted or hydroxy-, sulfo-, sulfato-, cyano- or carboxy-substituted C₁-C₄alkyl.

3. A reactive dye according to either claim 1 or claim 2, wherein
R₁, R₂, R₃ and R₆ are hydrogen.

4. A reactive dye according to any one of claims 1 to 3, wherein
X₁ and X₂ are chlorine or fluorine.

5. A reactive dye according to any one of claims 1 to 4, wherein
B is a radical of formula -CH₂-CH(R₆)- or -(R₆)CH-CH₂-, wherein R₆ is C₁-C₄alkyl, especially methyl.

6. A reactive dye according to any one of claims 1 to 5, wherein
A is a radical of formula (3.1)

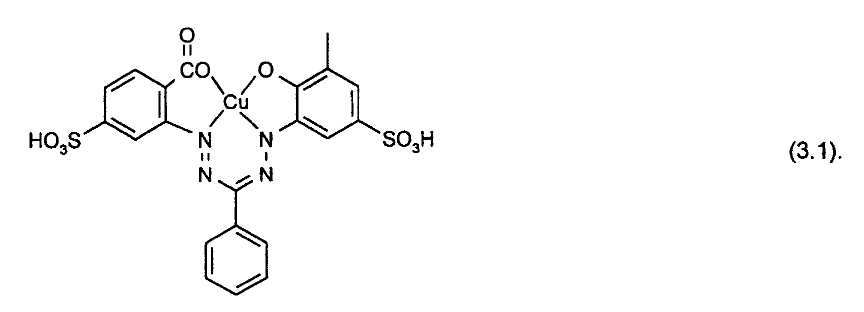

7. A reactive dye according to any one of claims 1 to 6, wherein
D is a radical of formula (5a) 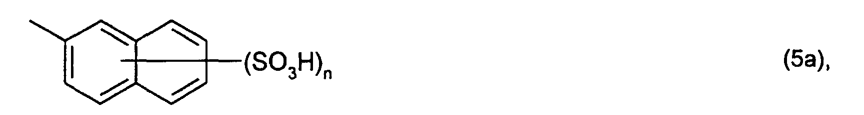 wherein
n is the number 2 or 3.

8. A reactive dye according to any one of claims 1 to 7, wherein
R₁, R₂, R₃ and R₄ are hydrogen,
X₁ and X₂ are chlorine or fluorine,
B is a radical of formula -CH₂-CH(R₆)- or -(R₆)CH-CH₂-, wherein R₆ is C₁-C₄alkyl, especially methyl,
A is a radical of formula (3.1) 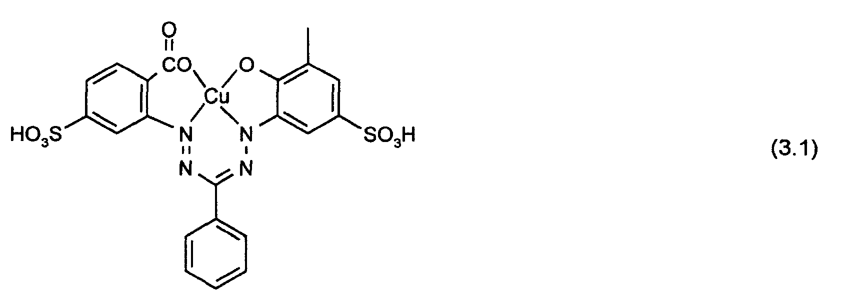 and
D is a radical of formula (5a) 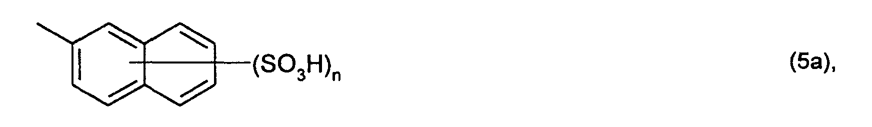 wherein
n is the number 2 or 3.

9. A reactive dye according to any one of claims 1 to 8, wherein
the dye of formula (1) is a dye of formula (1.1)

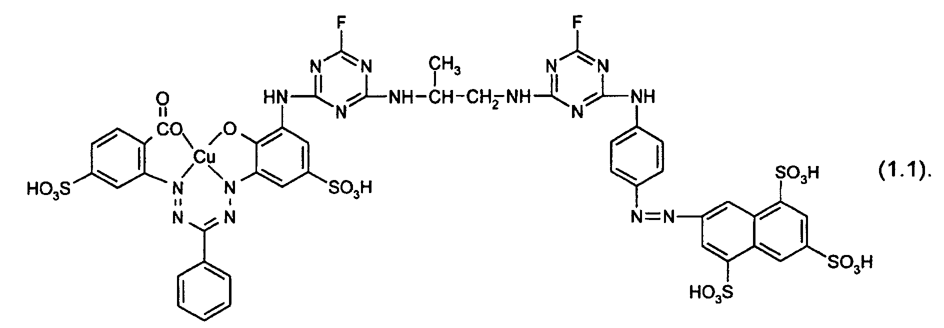

10. A process for the preparation of a reactive dye of formula (1) according to claim 1, which process comprises
condensing a compound of formula (6a) 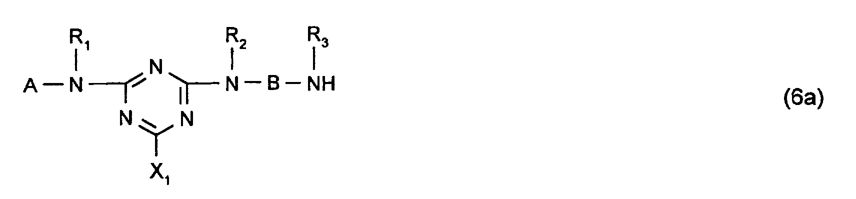 with a compound of formula (7a) 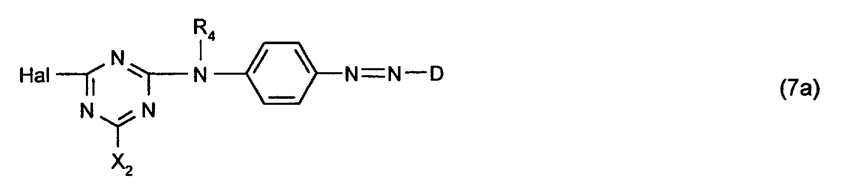 or condensing a compound of formula (6b) 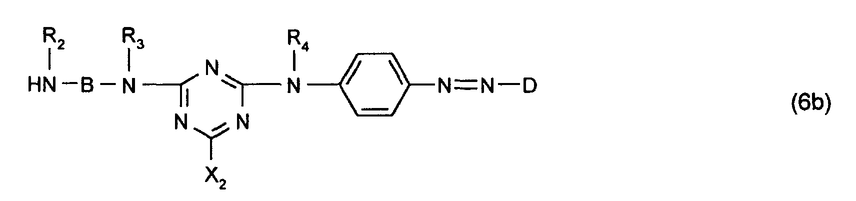 with a compound of formula (7b) 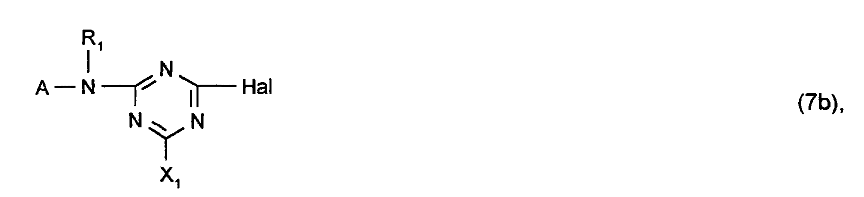 wherein Hal is halogen, and A, B, X₁, X₂, R₁, R₂, R₃ and R₄ are as defined in claim 1.

11. The use of a reactive dye according to any one of claims 1 to 9 or of a reactive dye obtained according to, claim 10 for dyeing or printing hydroxy-group-containing or nitrogen-containing fibre materials.

## Revendications

1. Colorants réactifs de formule (1) 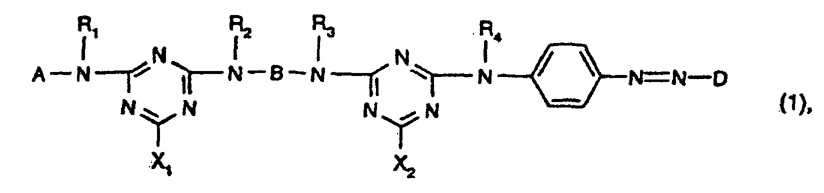 où
R₁, R₂, R₃ et R₄ représentent, indépendamment l'un de l'autre, un atome d'hydrogène ou un groupe alkyle en C₁-C₄ éventuellement substitué,
X₁ et X₂ représentent un atome d'halogène,
B représente un reste alkylène en C₂-C₁₂, qui peut être interrompu par 1, 2 ou 3 termes -O- et qui est non substitué ou substitué par un substituant hydroxy,
A représente un reste formazane de formule (2) ou (3) 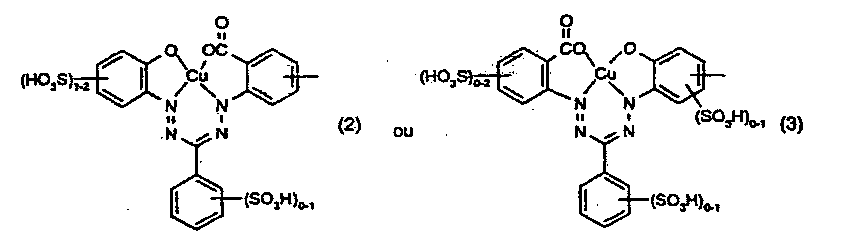
D représente un reste de formule (4) ou (5) 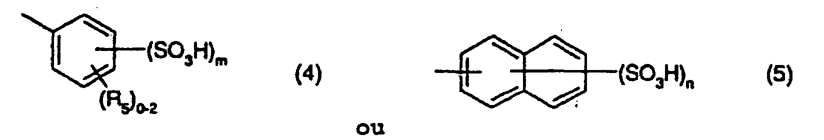 où
m vaut 1 ou 2,
n vaut 1, 2 ou 3 et
(R₅)₀₋₂ représente 0 à 2 substituants identiques ou différents pris dans le groupe comprenant alkyle en C₁-C₄, alkoxy en C₁-C₄, (alcanoyl en C₂-C₄)-amino et halogène.

2. Colorants réactifs selon la revendication 1, **caractérisés** en ce R₁, R₂, R₃ et R₄ représentent, indépendamment l'un de l'autre, un atome d'hydrogène ou un groupe alkyle en C₁-C₄ non substitué ou substitué par des substituants hydroxy, sulfo, sulfato, cyano ou carboxy.

3. Colorants réactifs selon la revendication 1 et 2, **caractérisés en ce que** R₁, R₂, R₃ et R₄ représentent un atome d'hydrogène.

4. Colorants réactifs selon l'une des revendications 1 à 3, **caractérisés en ce que** X₁ et X₂ représentent un atome de chlore ou de fluor.

5. Colorants réactifs selon l'une des revendications 1 à 4, **caractérisés en ce que** B représente un reste de formule -CH₂-CH(R₆)- ou -(R₆)CH-CH₂-, où R₆ représente un groupe alkyle en C₁-C₄, en particulier méthyle.

6. Colorants réactifs selon l'une des revendications 1 à 5, **caractérisés en ce que** A représente un reste de formule (3.1)

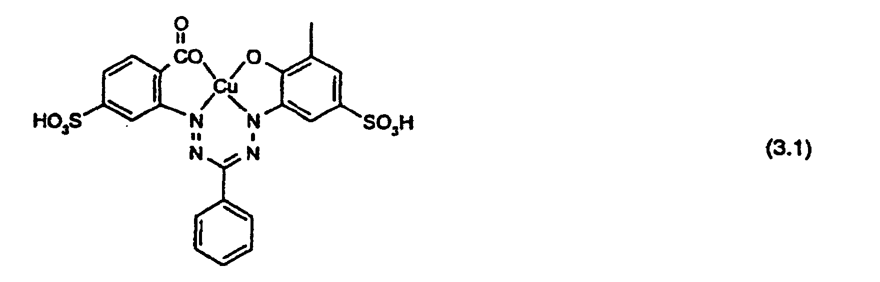

7. Colorants réactifs selon l'une des revendications 1 à 6, **caractérisés en ce que** D représente un reste de formule (5a) 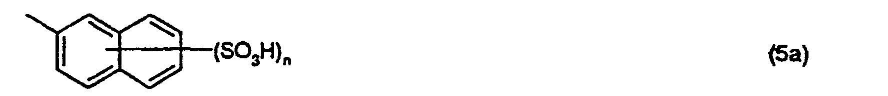 où
n vaut 2 ou 3.

8. Colorants réactifs selon l'une des revendications 1 à 7, **caractérisés en ce que**
R₁, R₂, R₃ et R₄ représentent un atome d'hydrogène,
X₁ et X₂ représentent un atome de chlore ou de fluor,
B représente un reste de formule -CH₂-CH(R₆)- ou -(R₆)CH-CH₂-, où R₆ représente un groupe alkyle en C₁-C₄, en particulier méthyle,
A représente un reste de formule (3.1) 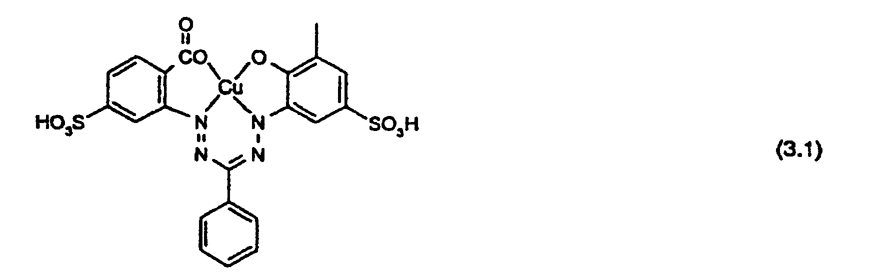
D représente un reste de formule (5a) 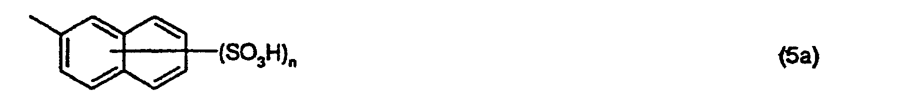 où
n vaut 2 ou 3.

9. Colorants réactifs selon l'une des revendications 1 à 8, **caractérisés en ce que** le colorant de formule (1) est un colorant de formule (1.1)

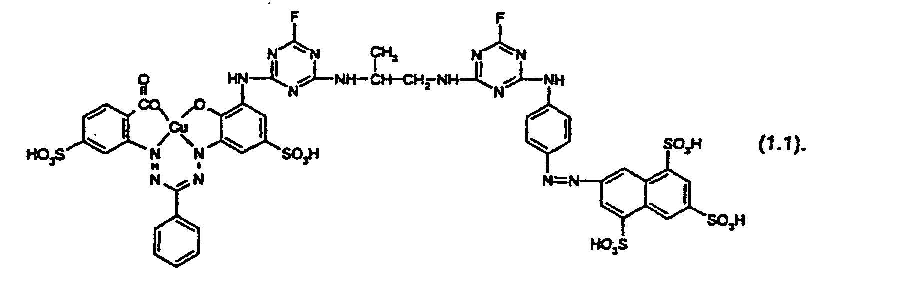

10. Procédé pour la préparation de colorants réactifs de formule (1) selon la revendication 1, **caractérisés en ce qu'**on condense
un composé de formule (6a) 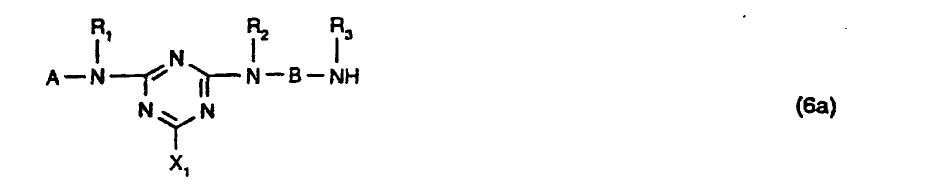 sur un composé de formule (7a) 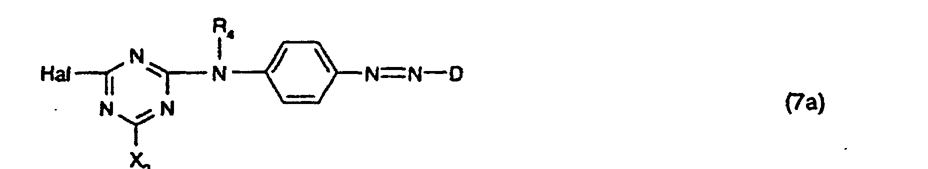 ou un composé de formule (6b) 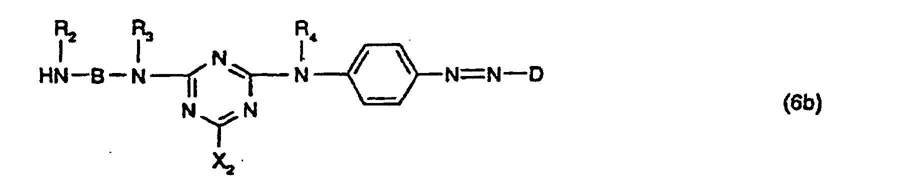 sur un composé de formule (7b) 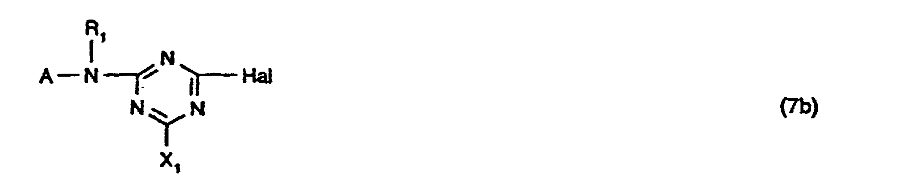 où Hal représente un atome d'halogène et A, B, X₁, X₂, R₁, R₂, R₃ et R₄ possèdent les significations données à la revendication 1.

11. Utilisation des colorants réactifs selon l'une des revendications 1 à 9 ou selon la revendication 10 pour la teinture ou l'impression de matières fibreuses hydroxylées ou azotées.
